# EUROPEAN PATENT APPLICATION

(11) **EP 3 805 923 A1**
(43) Date of publication of application: **14.04.2021**
(21) Application number: 19811719.4
(22) Date of filing: 16.04.2019
(51) Int. Cl.: G06F 9/46, G06F 9/50, G06F 11/20

(54) **INFORMATION PROCESSING SYSTEM, INFORMATION PROCESSING DEVICE, AND METHOD FOR CONTROLLING INFORMATION PROCESSING SYSTEM**

(30) Priority: 29.05.2018 JP 2018102404
(71) Applicant: Hitachi, Ltd., Tokyo 100-8280 (JP)
(72) Inventor: TANAKA, Daiki, Tokyo 100-8280 (JP); NAKATA, Yu, Tokyo 100-8280 (JP); SAKAGUCHI, Masanori, Tokyo 100-8280 (JP)
(74) Representative: MERH-IP Matias Erny Reichl Hoffmann Patentanwälte PartG mbB
(86) International application number: PCT/JP2019/016298
(87) International publication number: WO 2019/230228

(57) **Abstract**

To secure scalability and reliability of an information processing system while enjoying high productivity of a flow editor.

A data flow containing a distributed processing starting block, a distributed processing ending block, and a distributed processing target block which is a block described between the distributed processing starting block and the distributed processing ending block is edited by using a flow editor. A master apparatus forming a cluster transmits a message containing an execution instruction of the distributed processing target block to worker apparatuses forming the cluster when the distributed processing starting block has been reached at the time executing the data flow, and upon receipt of the message, each of the worker apparatuses executes the distributed processing target block and transmits a message containing an execution result of the distributed processing target block to the master apparatus, and upon receipt of the execution results from the worker apparatuses, the master apparatus executes a block of the data flow which follows the distributed processing ending block.

## Description

### [Technical Field]

The present invention relates to an information processing system, an information processing apparatus, and a method of controlling an information processing system.

### [Background Art]

This application claims the benefit of the priority based on Japanese Patent Application No. 2018-102404, filed on May 29, 2018, the entire contents of which are incorporated herein by reference.

Patent Literature 1 states that "provide an inter-system coordinating apparatus in a distributed system which is capable of improving the productivity in application development" and "The inter-system coordinating apparatus comprises: an application processing part which executes a predetermined application by accessing another system; and a combination processing part which, in a case where the application processing part has received an execution instruction for a predetermined application, select a module necessary for executing processing by the application from among a plurality of modules based on a combination of a non-functional requirement and a required value necessary for conducting processing between the system and the other system defined based on a communication protocol format and a system configuration and a network configuration contained in a protocol definition, in response to a request from the predetermined application."

### [Citation List]

### [Patent Literature]

[Patent Literature 1] Japanese Patent Application Publication No. 2013-61762

### [Summary of Invention]

### [Technical Problem]

In these days when businesses are drastically changing, a tool which is capable of readily and efficiently constructing a data flow by trial and error in the course of hypothesis testing has been desired. As such a tool, there are flow editors which are capable of defining data flows in a non-programming manner by utilizing GUIs (Graphical User Interfaces). The flow editors provide abundant input/output interfaces and allow for creating data flows in a way like combining blocks, and hence the flow editors have advantages that the editing environments are intuitive and easy to understand as compared with conventional methods using programs and scripts and the flow editors are easy to handle and excellent in productivity even for those who do not have high-level technical knowledge.

On the other hand, since many current flow editors have configurations mainly aiming at facilitating the construction of logics, supports are insufficient from the viewpoints of the scalability and the reliability of information processing systems in some cases. As a method of improving scalability and reliability of an information processing system, there is a distributed processing technology. However, no mechanism for distributed processing has been prepared in the current flow editors, and it is necessary to separately develop a mechanism for achieving distributed processing for software based on a data flow created using a flow editor. In addition, it is necessary to change the mechanism for distributed processing every time a logic is changed by the flow editor, bringing about a problem from the viewpoint of production efficiency and maintenance efficiency.

Patent Literature 1 describes the inter-system coordinating apparatus in a distributed system, which is configured for the purpose of improving the productivity of application development. However, Patent Literature 1 does not disclose any mechanism for distributed processing of software based on a data flow created using a flow editor. In addition, Patent Literature 1 does not disclose at all techniques based on the viewpoint of improving scalability and reliability of a system.

The present invention has been made in view of such backgrounds, and an object of the present invention is to provide an information processing system, an information processing apparatus, and a method of controlling an information processing system capable of securing scalability and reliability of an information processing system while enjoying high productivity of a flow editor.

### [Solution to Problem]

One of the present inventions that achieves the above objective is an information processing system which executes software based on a data flow edited by a flow editor, comprising a plurality of information processing apparatuses which form a cluster for conducting distributed processing of the software, wherein the data flow contains a distributed processing starting block which is a block to start the distributed processing, a distributed processing ending block which is a block to end the distributed processing, and a distributed processing target block which is a block which is described between the distributed processing starting block and the distributed processing ending block, a master apparatus which is one of the information processing apparatuses forming the cluster transmits a message containing an execution instruction of the distributed processing target block to a plurality of worker apparatuses which form the cluster when the distributed processing starting block has been reached at the time of executing the data flow, upon receipt of the message, each of the worker apparatuses executes the distributed processing target block and transmits a message containing an execution result of the distributed processing target block to the master apparatus, and upon receipt of the execution results from the plurality of worker apparatuses, the master apparatus executes a block of the data flow which follows the distributed processing ending block.

Moreover, problems disclosed in the present application and methods of solving these problems will be revealed from [Description of Embodiments] and the drawings.

### [Advantageous Effects of Invention]

According to the present invention, it is possible to secure scalability and reliability of an information processing system while enjoying high productivity of a flow editor.

### [Brief Description of Drawings]

[Fig. 1] Fig. 1 is a diagram showing a schematic configuration of an information processing system.
[Fig. 2] Fig. 2 shows an example of hardware of an information processing apparatus that can be utilized as a flow editing apparatus, a sensor apparatus, a cluster management apparatus, an AP executing apparatus, and a management apparatus.
[Fig. 3] Fig. 3 is a diagram showing main functions that the flow editing apparatus has.
[Fig. 4] Fig. 4 is a diagram showing main functions that the sensor apparatus has.
[Fig. 5] Fig. 5 is a diagram showing main functions that the cluster management apparatus has.
[Fig. 6] Fig. 6 is a diagram showing main functions that the management apparatus has.
[Fig. 7] Fig. 7 is a diagram showing main functions that the AP executing apparatus has.
[Fig. 8] Fig. 8 is a diagram conceptually showing the functions of AP software.
[Fig. 9] Fig. 9 is a diagram showing an example of a data flow.
[Fig. 10] Fig. 10 is a diagram for explaining a container deployment sequence.
[Fig. 11] Fig. 11 is a diagram for explaining an AP software execution sequence.
[Fig. 12] Fig. 12 is a diagram for explaining an AP software execution sequence (when a worker has failed).
[Fig. 13] Fig. 13 is a diagram for explaining an AP software execution sequence (when a master has failed).
[Fig. 14] Fig. 14 is a flowchart for explaining the detail of a process I.
[Fig. 15] Fig. 15 is a flowchart for explaining the detail of a process II.
[Fig. 16] Fig. 16 is a flowchart for explaining the detail of a process III.
[Fig. 17] Fig. 17 is a flowchart for explaining the detail of a failure monitoring process (process IV).
[Fig. 18] Fig. 18 is a diagram for explaining a distributed processing sequence.
[Fig. 19] Fig. 19 is a flowchart for explaining the processing of a flow execution controlling part.
[Fig. 20] Fig. 20 is a flowchart for explaining the processing of a processing coordinating part.
[Fig. 21] Fig. 21 is a diagram showing a data configuration of a message.
[Fig. 22] Fig. 22 shows an example of cluster management information.

### [Description of Embodiments]

Hereinafter, an embodiment will be described with reference to the drawings. In the following description, the same or similar configurations are denoted by the same signs to omit repetitive description in some cases. In addition, "application" is sometimes described as "AP".

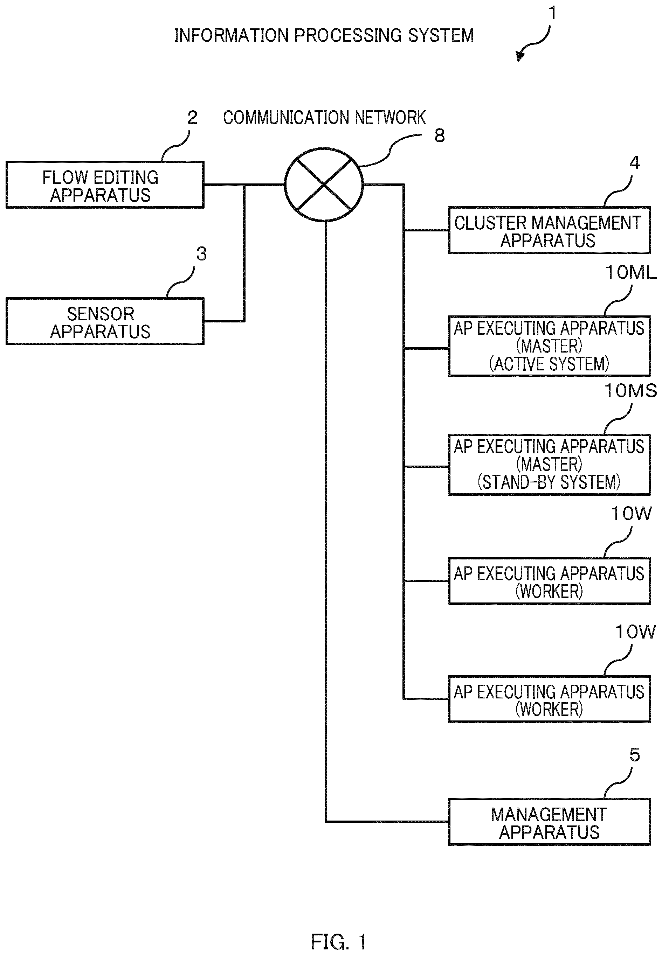

Fig. 1 shows a schematic configuration of an information processing system 1 described as an embodiment. As shown in Fig. 1, the information processing system 1 includes: a flow editing apparatus 2; one or more sensor apparatuses 3; a cluster management apparatus 4; four AP executing apparatuses 10; and a management apparatus 5. These apparatuses are all configured by using information processing apparatuses (computers) and are communicatively coupled to one another through a communication network 8.

The communication network 8 is a communication infrastructure (infrastructure) that achieves communications according to a predetermined communication protocol such as the Ethernet (registered trademark) or TCP/IP, and is, for example, a LAN (Local Area Network), a WAN (Wide Area Network), the Internet, a leased line, a public communication network, or the like.

The four AP executing apparatuses 10 form a cluster, and function as an AP executing apparatus (master)(active system) 10ML, an AP executing apparatus (master) (stand-by system) 10MS, and AP executing apparatuses (workers) 10W, respectively. Note that although the number of the AP executing apparatuses 10 is set to 4 in this embodiment for facilitating the description, the number of the AP executing apparatuses 10 is not necessarily limited.

The AP executing apparatus (master)(active system) 10ML and the AP executing apparatus (master)(stand-by system) 10MS form a failover cluster in which the AP executing apparatus (master)(active system) 10ML serves as an active system (Leader) and the AP executing apparatus (master)(stand-by system) 10MS serves as a stand-by system (Stand-by)(backup destination at the occurrence of failure).

In addition, the four AP executing apparatuses 10 form a load balancing cluster in which the AP executing apparatus (master)(active system) 10ML and the AP executing apparatus (master)(stand-by system) 10MS function as master-side apparatuses in the load balancing cluster and the two AP executing apparatuses (workers) 10W function as worker-side apparatuses in the load balancing cluster. Note that although the number of the AP executing apparatuses (workers) 10W is 2 in this embodiment, the number of the AP executing apparatuses (workers) 10W may be 3 or more.

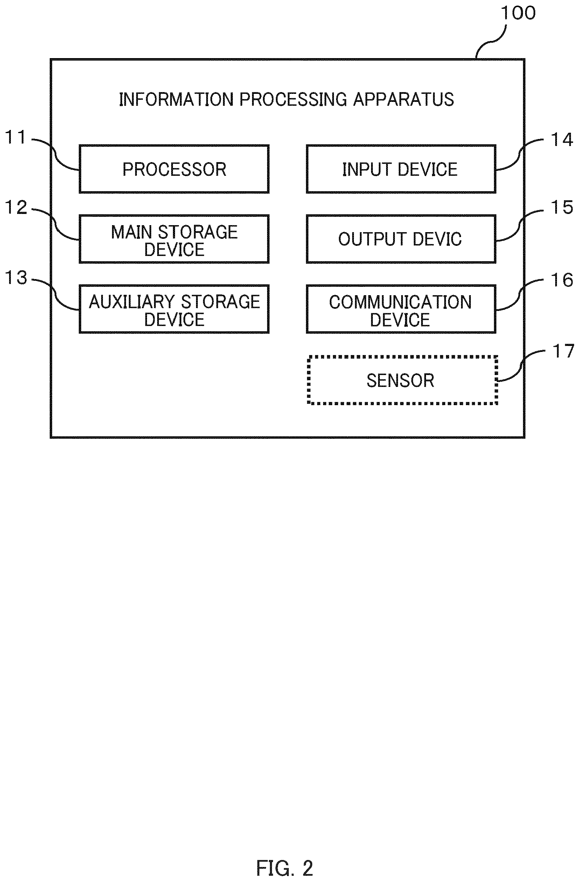

Fig. 2 shows an example of hardware of the information processing apparatus 100 that can be utilized as each of the flow editing apparatus 2, the sensor apparatus 3, the cluster management apparatus 4, the AP executing apparatuses 10, and the management apparatus 5. As shown in Fig. 2, the information processing apparatus 100 includes: a processor 11; a main storage device 12; an auxiliary storage device 13; an input device 14; an output device 15; a communication device 16; and a sensor 17. Note that the sensor 17 is a component essential for only the sensor apparatus 3.

The flow editing apparatus 2, the sensor apparatus 3, the cluster management apparatus 4, the AP executing apparatuses 10, and the management apparatus 5 may be achieved by using a virtual information processing resource such as a cloud server provided by a cloud system, for example. In addition, for example, the flow editing apparatus 2, the sensor apparatus 3, the cluster management apparatus 4, the AP executing apparatuses 10, and the management apparatus 5 may be achieved by a plurality of information processing apparatuses 100 that operate in cooperation. In addition, for example, 2 or more out of the flow editing apparatus 2, the sensor apparatus 3, the cluster management apparatus 4, the AP executing apparatuses 10, and the management apparatus 5 may be achieved by a common information processing apparatus 100.

The processor 11 is configured by using a CPU (Central Processing Unit), an MPU (Micro Processing Unit), a GPU (Graphics Processing Unit), or the like, for example. The main storage device 12 is a device that stores programs and data and is a ROM (Read Only Memory) (an SRAM (Static Random Access Memory), am NVRAM (Non Volatile RAM), a mask ROM (Mask Read Only Memory), a PROM (Programmable ROM), or the like), a RAM (Random Access Memory) (a DRAM (Dynamic Random Access Memory) or the like), or the like, for example. The auxiliary storage device 13 is a hard disk drive (Hard Disk Drive), a flash memory, an SSD (Solid State Drive), an optical storage device (a CD (Compact Disc), a DVD (Digital Versatile Disc), or the like), or the like. Programs and data stored in the auxiliary storage device 13 are read to the main storage device 12 as needed.

The input device 14 is a user interface that receives information from a user and is a keyboard, a mouse, a card reader, a touch panel, or the like, for example. The output device 15 is a user interface that outputs information (display output, audio output, print output, or the like) to provide the user with the information and is a display device (an LCD (Liquid Crystal Display), a graphic card, or the like) that visualizes various kinds of information, an audio output device (speaker), a printing device, or the like, for example. The communication device 16 is a communication interface that communicates with the other devices via the communication network 8 and is an NIC (Network Interface Card), a wireless communication module, an USB (Universal Serial Interface) module, a serial communication module, or the like, for example. The communication device 16 may also be allowed to function as an input device that receives information from the other devices communicatively coupled. In addition, the communication device 16 may be allowed to function as an output device that transmits information to the other devices communicatively coupled.

The sensor apparatus 3 includes one or more sensors 17 (a camera, an infrared detector, a millimeter-wave radar, a thermometer, a vibrometer, and the like) that correct various types of data (hereinafter also referred to as sensor data) such as environmental information from sensing targets. The information processing system 1 may include a plurality of the sensor apparatuses 3.

The functions of the flow editing apparatus 2, the sensor apparatus 3, the cluster management apparatus 4, the AP executing apparatuses 10, and the management apparatus 5 are achieved by the processor 11 reading and executing programs stored in the main storage device 12. In addition, the programs may be distributed while stored in recording media, for example. Moreover, the programs may be distributed by downloading the programs from a distribution server that accumulates and manages the programs via a communication facility to the flow editing apparatus 2, the sensor apparatus 3, the cluster management apparatus 4, the AP executing apparatuses 10, and the management apparatus 5, for example.

The flow editing apparatus 2, the sensor apparatus 3, the cluster management apparatus 4, the AP executing apparatuses 10, and the management apparatus 5 may further include other functions such as an operating system, a file system, a device driver, a DBMS (DataBase Management System), for example. The flow editing apparatus 2, the sensor apparatus 3, the cluster management apparatus 4, the AP executing apparatuses 10, and the management apparatus 5 store various types of information (data) as tables and files in databases, for example.

The flow editing apparatus 2 shown in Fig. 1 provides the user with an environment where a data flow is edited through dialogue processing (hereinafter, referred to as a flow editor). The flow editing apparatus 2 generates a flow file, which is data in file format in which a data flow generated by utilizing a flow editor has been written, and transfers the flow file thus generated to the management apparatus 5.

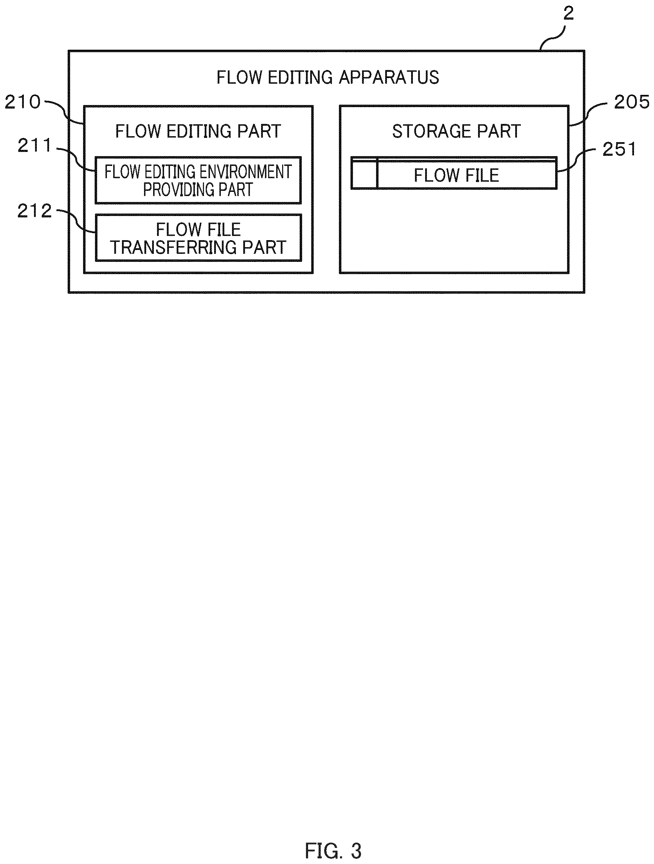

Fig. 3 shows main functions that the flow editing apparatus 2 has. As shown in Fig. 3, the flow editing apparatus 2 has functions of a storage part 205 and a flow editing part 210.

The storage part 205 stores a flow file 251, which is a file in which the entity of an edited data flow (the logic of the application) has been written. The flow editing part 210 includes: a flow editing environment providing part 211, which provides the user with an interactive editing environment for the data flow by the flow editor; and a flow file transferring part 212, which transfers the flow file 251 to the management apparatus 5.

In Fig. 1 again, the sensor apparatus 3 collects various data (hereinafter referred to as sensor data) from a sensing target and supplies the collected data to the AP executing apparatuses 10 via the communication network 8.

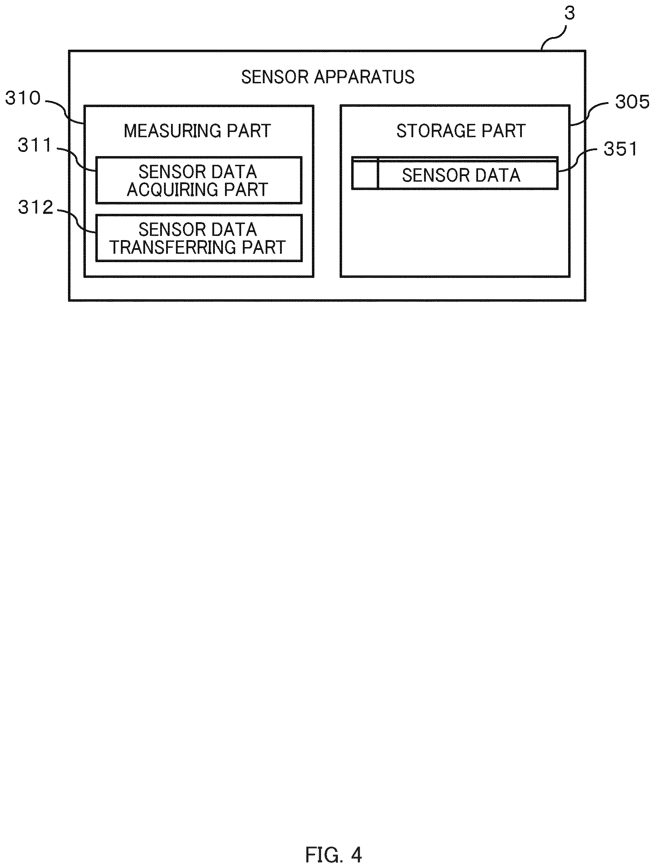

Fig. 4 shows main functions that the sensor apparatus 3 has. As shown in Fig. 4, the sensor apparatus 3 has functions of a storage part 305 and a measuring part 310.

The measuring part 310 includes: a sensor data acquiring part 311, which acquires sensor data from the sensor 17; and a sensor data transferring part 312, which transfers the sensor data 351 to the AP executing apparatuses 10. The storage part 305 stores the sensor data acquired by the sensor data acquiring part 311 as sensor data 351.

Note that the sensor apparatus 3 is only an example of an apparatus that provides input data to be processed by the AP executing apparatuses 10, and the input data may be data provided by another method (data collected by the crawling of an information providing website on the Internet, big data collected by an IoT system, or the like).

The cluster management apparatus 4 shown in Fig. 1 monitors the operating status of the aforementioned cluster formed by the AP executing apparatuses 10.

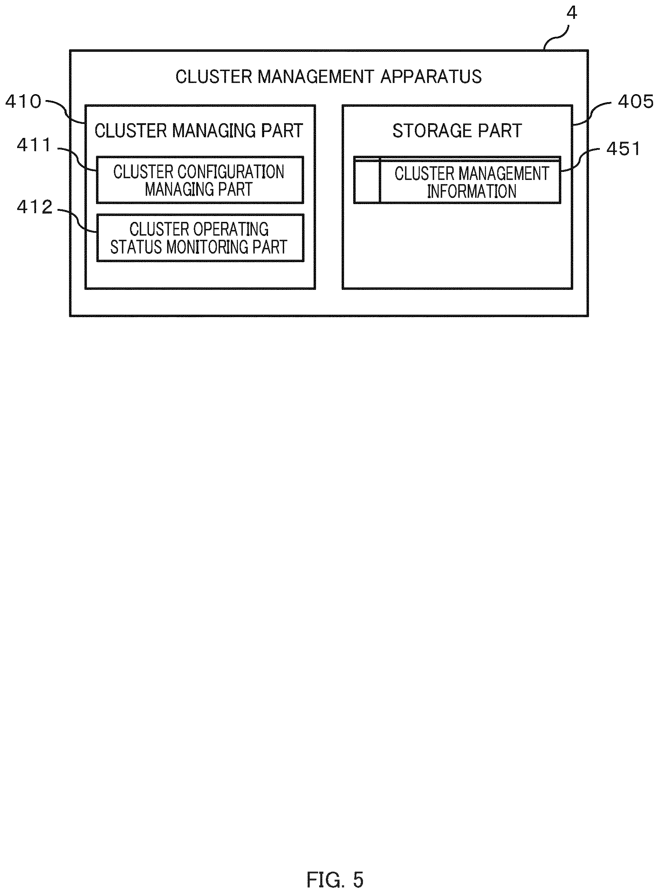

Fig. 5 shows main functions that the cluster management apparatus 4 has. As shown in Fig. 5, the cluster management apparatus 4 includes a storage part 405 and a cluster managing part 410.

The storage part 405 stores cluster management information 451 in which information on the configuration and the operating status of the cluster is managed. The cluster managing part 410 includes: a cluster configuration managing part 411, which manages the configuration of the cluster; and a cluster operating status monitoring part 412, which monitors the operating status of the cluster.

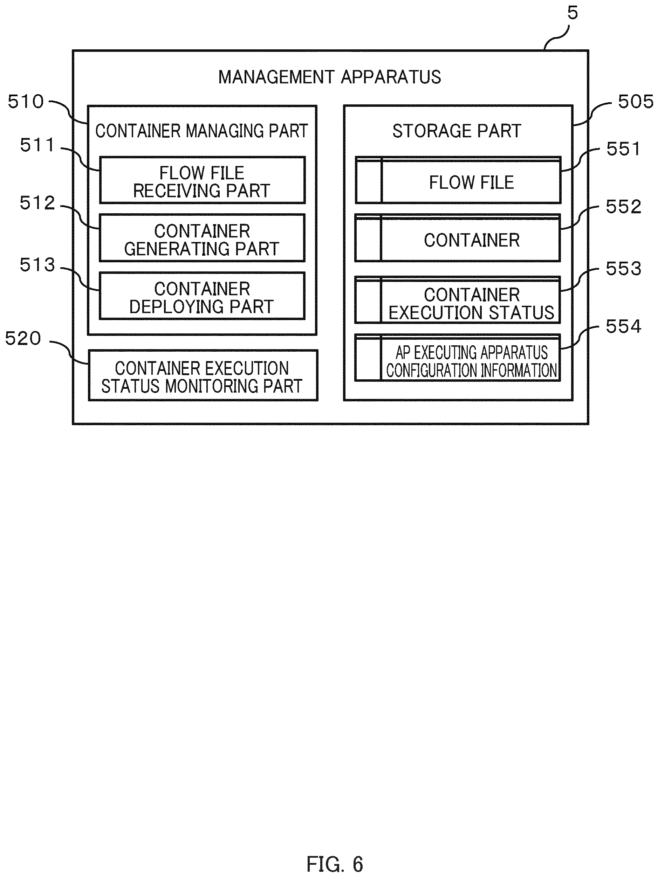

Fig. 6 shows main functions that the management apparatus 5 has. As shown in Fig. 6, the management apparatus 5 includes a storage part 505, a container managing part 510, and a container execution status monitoring part 520.

The storage part 505 stores a flow file 551, a container 552, a container execution status 553, and an AP executing apparatus configuration information 554.

The container managing part 510 includes a flow file receiving part 511, a container generating part 512, and a container deploying part 513.

The flow file receiving part 511 receives a flow file sent from the flow editing apparatus 2 via the communication network 8. The storage part 505 stores the flow file received by the flow file receiving part 511 as a flow file 551.

The container generating part 512 generates a container, which is image data of an application software (hereinafter referred to as an AP software) based on the flow file 551. The container is obtained by packaging information on the execution module and the execution environment of the AP software and information on the developing method and the operating method. Examples of the container include a container in Docker (registered trademark). The storage part 505 stores the container generated by the container generating part 512 as a container 552.

The container deploying part 513 deploys the container 552 to the AP executing apparatuses 10 via the communication network 8. In the AP executing apparatus configuration information 554, information on the AP executing apparatuses 10 in the communication network 8 (network ID and the like) is managed. The container deploying part 513 specifies the deployment destination based on the AP executing apparatus configuration information 554.

The container execution status monitoring part 520 acquires information on the execution status of the container in each of the AP executing apparatuses 10. The storage part 505 stores the information as a container execution status 553.

In Fig. 1 again, the AP executing apparatus 10 executes AP software based on the container 552 deployed by the management apparatus 5. In the present embodiment, the AP software is assumed to be software that analyzes sensor data received from the sensor apparatus 3 and output a result of the analysis; however, the type of the AP software is not necessarily limited.

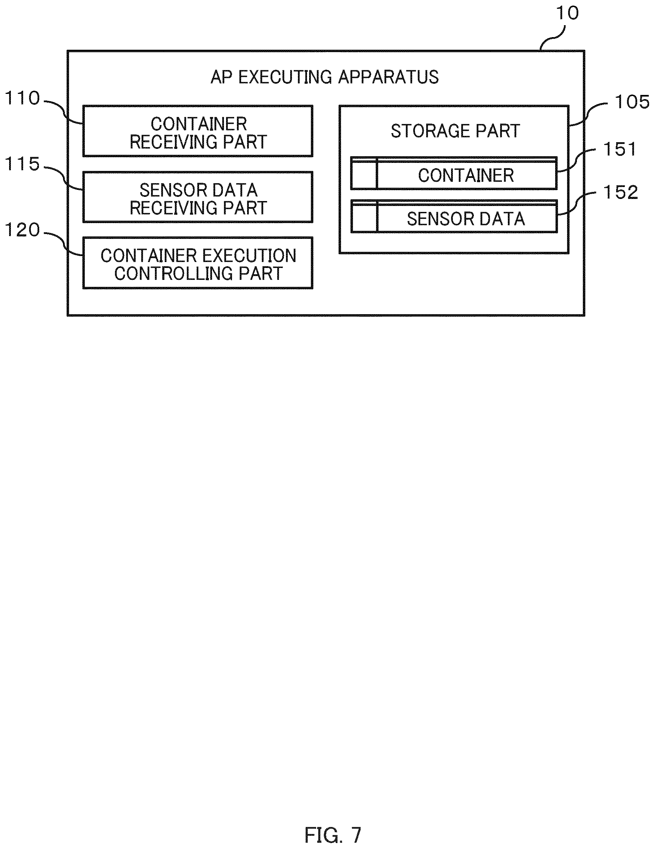

Fig. 7 shows main functions that the AP executing apparatus 10 has. As shown in Fig. 7, the AP executing apparatus 10 includes an storage part 105, a container receiving part 110, and a container execution controlling part 120.

The container receiving part 110 receives the container sent from the management apparatus 5. The storage part 105 stores the container received by the container receiving part 110 as a container 151. The sensor data receiving part 115 receives sensor data sent from the sensor apparatus 3. The storage part 105 stores the sensor data received by the sensor data receiving part 115 as sensor data 152. The container execution controlling part 120 controls the executions of the AP software based on the container and monitors the state of the AP software.

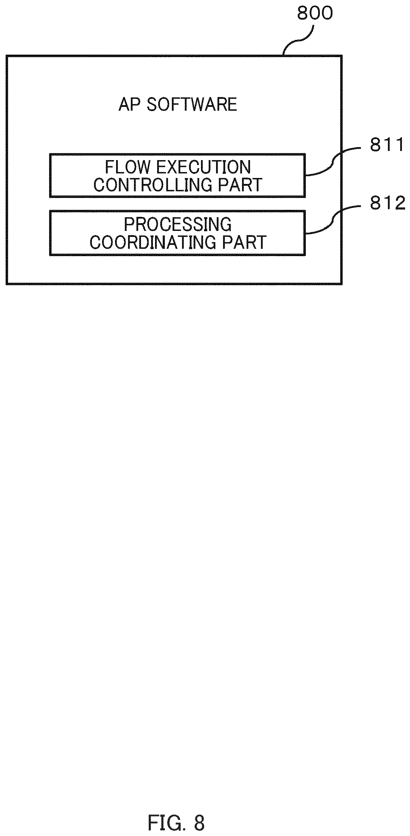

Fig. 8 conceptually shows the functions of AP software achieved by executing a container. AP software 800 has functions of a flow execution controlling part 811 and a processing coordinating part 812. Note that part of these functions may be achieved by the operating system or the container execution controlling part 120 included in the AP executing apparatus 10.

The flow execution controlling part 811 executes the logic (algorithm) of the main portion of the AP software 800.

The processing coordinating part 812 provides functions for the plurality of AP executing apparatuses 10 to conduct load distribution (for example, parallel distribution or concurrent distribution) to execute the AP software 800 (functions of transmitting and receiving messages between the AP executing apparatuses 10 to coordinate processing between the AP executing apparatuses 10).

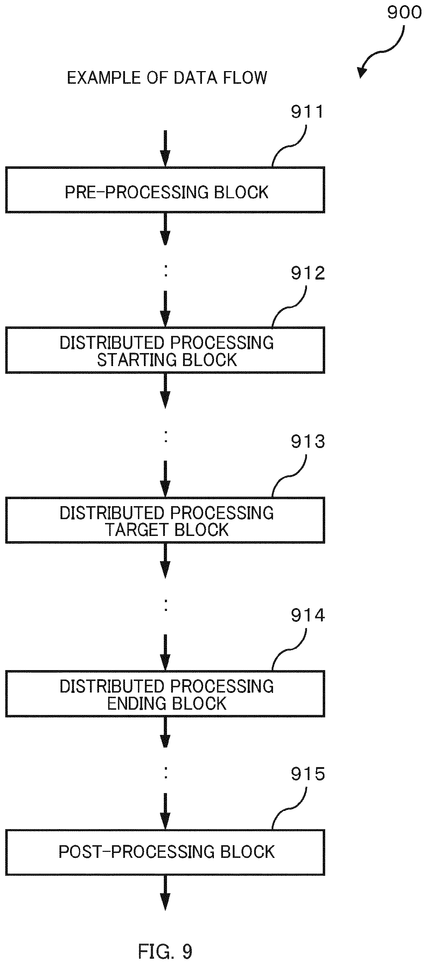

Fig. 9 shows an example of a data flow generated by the flow editor provided by the flow editing part 210 of the flow editing apparatus 2. A data flow 900 is obtained by describing the flow of processing of the AP software 800 (logic) as a structure in which a plurality of blocks (also referred to as nodes) shown by rectangular frames in Fig. 9 are coupled by coupling lines (also referred to as links) shown by arrows in Fig. 9.

As shown in Fig. 9, the data flow 900 contains one or more pre-processing blocks 911, one or more distributed processing starting blocks 912 following the pre-processing blocks 911, one or more distributed processing target blocks 913 following the distributed processing starting blocks 912, one or more distributed processing ending blocks 914 following the distributed processing target blocks 913, and one or more post-processing blocks 915 following the distributed processing ending blocks 914.

The distributed processing target block 913 is a block to be subjected to the distributed processing by the aforementioned load balancing cluster. As shown in Fig. 9, in the data flow 900, the distributed processing target block 913 is described at a position between the distributed processing starting block 912 and the distributed processing ending block 914.

The distributed processing starting block 912 contains a logic for the AP executing apparatus (master)(active system) 10ML to start the distributed processing. The distributed processing ending block 914 contains a logic for the AP executing apparatus (worker) 10W to end the distributed processing.

The pre-processing block 911 contains, for example, a logic to conduct pre-processing on input data of the AP software 800 (a logic to convert the sensor data 351 to data in predetermined format, and the like).

The post-processing block 915 contains, for example, a logic to conduct post-processing on data generated in the distributed processing target block 913 (a logic to convert the generated data to data in predetermined format, and the like) .

The management apparatus 5 deploys a container generated based on the data flow 900 having the configuration shown in Fig. 9 to each of the plurality of AP executing apparatuses 10, which forms the cluster.

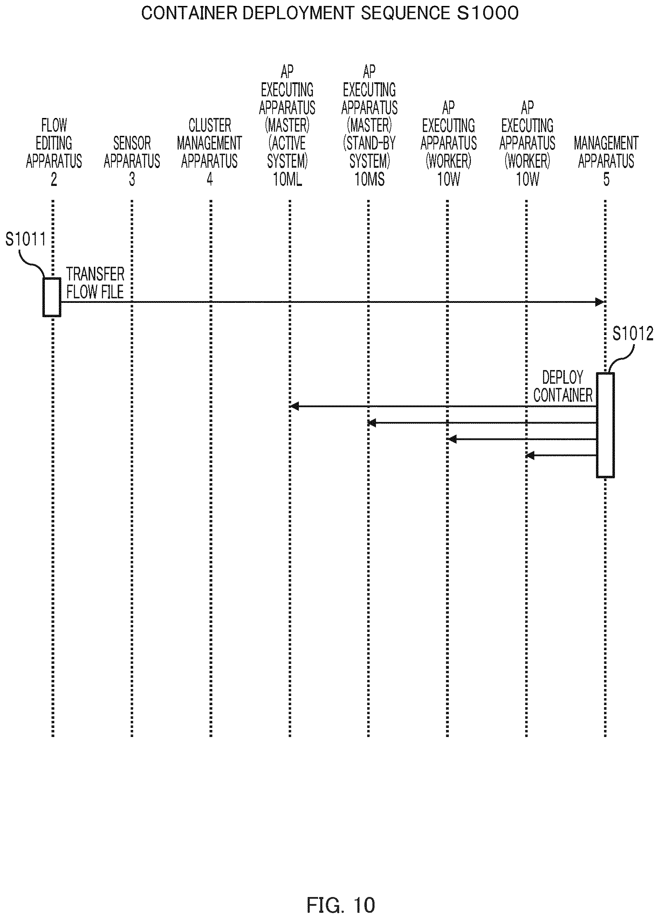

Fig. 10 is a sequence diagram for explaining processing (hereinafter referred to as a container deployment sequence S1000) conducted in the information processing system 1 when the management apparatus 5 deploys a container 552 to the AP executing apparatuses 10.

As shown in Fig. 10, first, the flow editing apparatus 2 transfers a flow file to the management apparatus 5, and the management apparatus 5 stores the flow file as a flow file 551 (S1011).

The management apparatus 5 generates the container 552 based on the flow file 551, and deploys the generated container 552 to each of the four AP executing apparatuses 10 (S1012).

Note that in the present embodiment, the management apparatus 5 deploys the containers 552 having a common content to each of the four AP executing apparatuses 10 which form the cluster. By causing the containers 552 deployed to the respective AP executing apparatuses 10 to have the common content, it becomes unnecessary for the management apparatus 5 to manage the containers to be deployed to the AP executing apparatuses 10 for each AP executing apparatus 10, making it possible to simplify the management of containers and the processing to deploy containers. Note that the mechanism that makes common the contents of the containers 552 to be deployed to the respective AP executing apparatuses 10 will be described later.

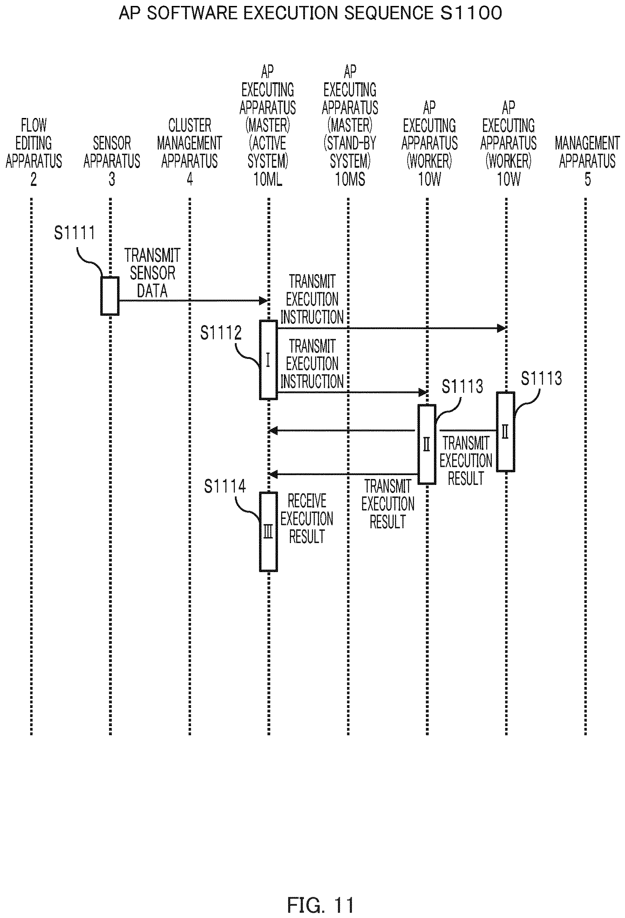

Fig. 11 is a sequence diagram for explaining the flow of a process (hereinafter referred to as an AP software execution sequence S1100) conducted in the information processing system 1 when the AP executing apparatuses 10 execute the AP software 800 based on the container 151.

First, in S1111, the sensor apparatus 3 transmits sensor data to the AP executing apparatus (master)(active system) 10ML.

Upon receipt of the sensor data, the AP executing apparatus (master)(active system) 10ML stores the received sensor data as sensor data 152 and starts executing the AP software 800 based on the container 151 using the sensor data 152 as input data.

Specifically, the AP executing apparatus (master)(active system) 10ML first executes the pre-processing block 911 to conduct pre-processing (conversion of the data format of the sensor data, and the like). When the pre-processing block 911 has completed and the processing has reached the distributed processing starting block 912, the AP executing apparatus (master)(active system) 10ML subsequently transmits (dispatches), with the sensor data, a message (hereinafter also referred to as an execution instruction) instructing the 2 AP executing apparatuses (workers) 10W to executes the distributed processing target block 913 (S1112). Note that in the present example, it is assumed that the AP executing apparatus (master)(active system) 10ML transmits different sensor data to the 2 AP executing apparatuses (workers) 10W, respectively, and the 2 AP executing apparatuses (workers) 10W execute a common distributed processing target block 913 on the different sensor data, respectively.

The AP executing apparatuses (workers) 10W which have received the execution instruction from the AP executing apparatus (master)(active system) 10ML (or the function achieved by the distributed processing starting blocks 912 of the AP executing apparatuses (workers) 10W in more detail) each start executing the distributed processing target block 913 on the sensor data received together with the execution instruction. After executing the distributed processing target block 913, the AP executing apparatuses (workers) 10W (or the function achieved by the distributed processing ending blocks 914 of the AP executing apparatuses (workers) 10W in more detail) transmits a message that notifies the AP executing apparatus (master)(active system) 10ML of the execution result (hereinafter also referred to as execution result) (S1113).

Upon receipt of the execution result from each of the 2 AP executing apparatuses (workers) 10W, the AP executing apparatus (master)(active system) 10ML (or the function achieved by the distributed processing ending block 914 of the AP executing apparatus (master)(active system) 10ML in more detail) executes the post-processing block 915 (S1114).

Here, in the case where a failure has occurred in one of the AP executing apparatuses (workers) 10W in the above-described AP software execution sequence S1100, the processing is allowed to continue automatically by the aforementioned failover cluster.

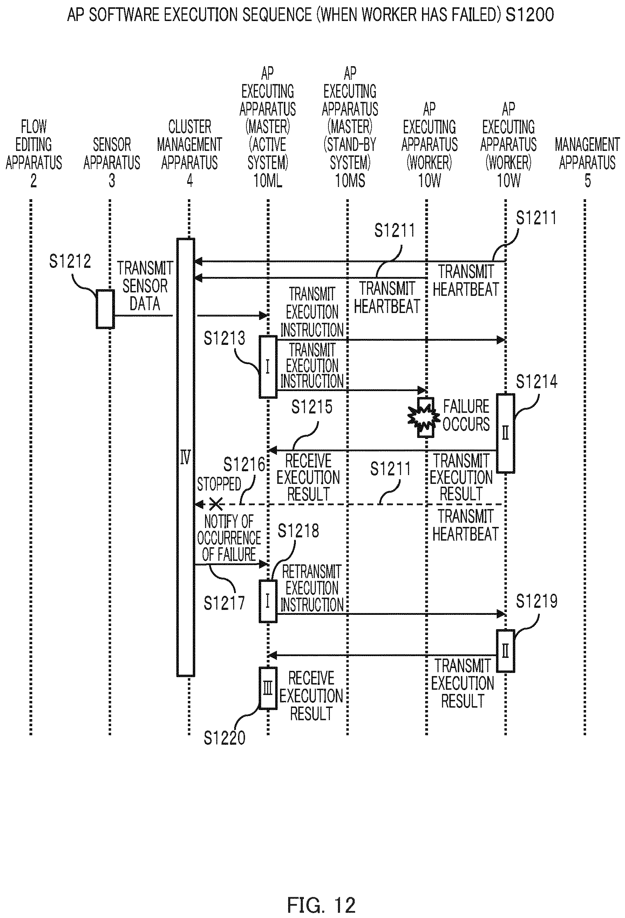

Fig. 12 is a sequence diagram for explaining the flow of a process (hereinafter referred to as an AP software execution sequence (when the worker has failed) S1200) conducted in the information processing system 1 in the case where a failure has occurred in one of the AP executing apparatus (worker) 10W.

As shown in Fig. 12, the AP executing apparatuses (workers) 10W transmit heartbeats to the cluster management apparatus 4 (S1211).

The processes in S1212, S1213, and S1214 subsequently executed are the same as in S1111, S1112, and S1113 of Fig. 11, respectively. Note that although heartbeats are transmitted from the AP executing apparatuses (workers) 10W to the cluster management apparatus 4 also in the AP software execution sequence S1100 shown in Fig. 11 in the same manner, the description is omitted in Fig. 11 for simplifying the description.

Upon detection of occurrence of a failure in one of the AP executing apparatuses (workers) 10W due to the stop of heartbeats after the execution instruction is transmitted from the AP executing apparatus (master)(active system) 10ML to the AP executing apparatuses (workers) 10W (S1216), the cluster management apparatus 4 notifies the AP executing apparatus (master)(active system) 10ML of the occurrence of the failure in the corresponding AP executing apparatus (worker) 10W (S1217).

Upon receipt of the notification, the AP executing apparatus (master)(active system) 10ML retransmits the execution instruction together with the sensor data which is to be transmitted to the one AP executing apparatus (worker) 10W in which the failure has occurred, to the other AP executing apparatus (worker) 10W which is normally operating (S1218).

Upon receipt of the above-described execution instruction, the other AP executing apparatus (worker) 10W executes the distributed processing target block 913 on the sensor data received together with the execution instruction and transmits the execution result to the AP executing apparatus (master)(active system) 10ML (S1219).

Upon receipt of the execution result from the 2 AP executing apparatuses (workers) 10W, the AP executing apparatus (master)(active system) 10ML executes the post-processing block 915 (S1215, S1220).

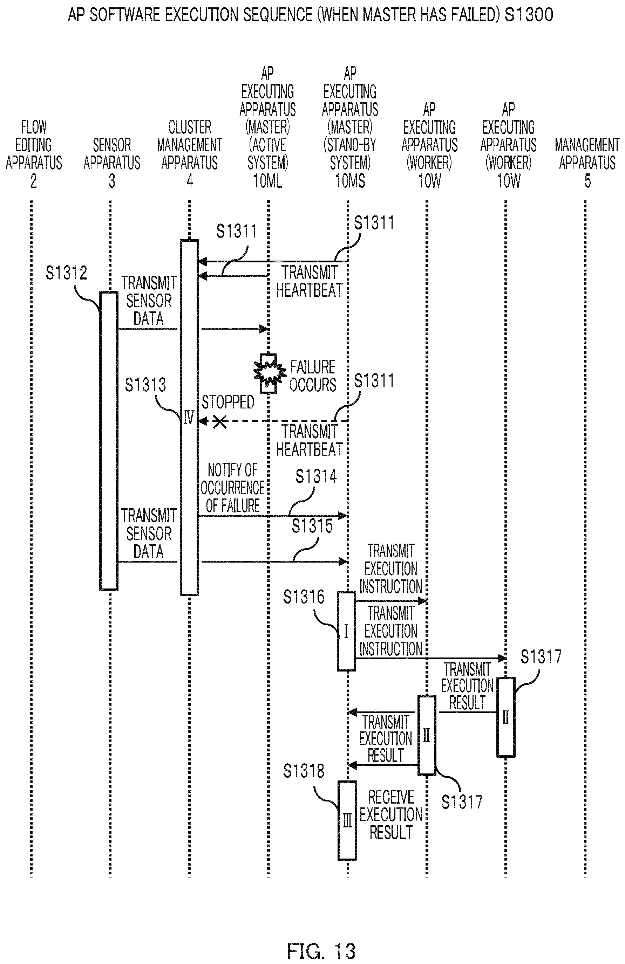

Fig. 13 is a sequence diagram for explaining the flow of a process (hereinafter referred to as AP software execution sequence (when the master has failed) S1300) conducted in the information processing system 1 in the case where a failure has occurred in the AP executing apparatus (master)(active system) 10ML. Hereinafter, the AP software execution sequence (when the master has failed) S1300 will be described with Fig. 13.

As shown in Fig. 13, the AP executing apparatus (master)(active system) 10ML and the AP executing apparatus (master)(stand-by system) 10MS are transmitting heartbeats to the cluster management apparatus 4 (S1311). Note that since the process in S1312 is the same as in S1111 of Fig. 11, the description is omitted. Although heartbeats are transmitted from the AP executing apparatus (master)(active system) 10ML and the AP executing apparatus (master)(stand-by system) 10MS to the cluster management apparatus 4 in the AP software execution sequence S1100 shown in Fig. 11 in the same manner, the description is omitted in Fig. 11 for simplifying the description. In addition, in Fig. 11, the transmission of heartbeats from the AP executing apparatus (worker) 10W to the cluster management apparatus 4, which is shown in Fig. 12, is also omitted.

Upon detection of occurrence of a failure in the AP executing apparatus (master)(active system) 10ML due to the stop of heartbeats (S1313), the cluster management apparatus 4 notifies the AP executing apparatus (master)(stand-by system) 10MS of the occurrence of the failure in the AP executing apparatus (master)(active system) 10ML (S1314).

Upon receipt of the notification, the AP executing apparatus (master)(stand-by system) 10MS starts operating as the active system to receive sensor data from the sensor apparatus 3 (S1315). Thereafter, the same processes (S1316 to S1318) as in S1112 to S1114 of Fig. 11 are conducted in the information processing system 1.

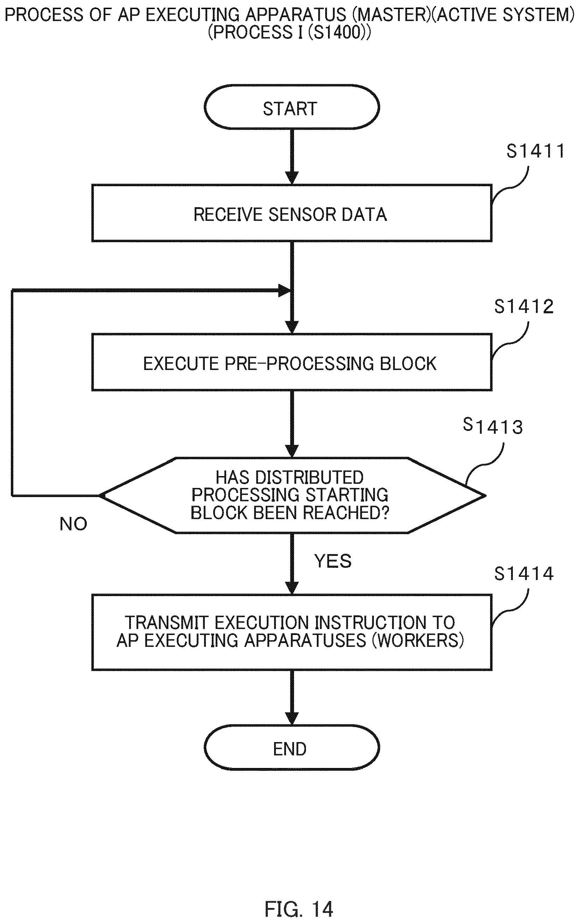

Fig. 14 is a flowchart for explaining the detail of a process (hereinafter referred to as a process I (S1400)) in S1112 of Fig. 11 conducted by the AP executing apparatus (master)(active system) 10ML. Hereinafter, the process I (S1400) will be described with Fig. 14.

First, the AP executing apparatus (master)(active system) 10ML receives sensor data from the sensor apparatus 3 (S1411).

Subsequently, the AP executing apparatus (master)(active system) 10ML starts executing the AP software 800, and the flow execution controlling part 811 of the AP software 800 starts executing the pre-processing block 911 (S1412).

The flow execution controlling part 811 determines whether or not the pre-processing block 911 has been completed and the processing has reached the distributed processing starting block 912 (S1413). When the processing has reached the distributed processing starting block 912 (S1413: YES), the processing coordinating part 812 of the AP software 800 transmits an execution instruction to the AP executing apparatuses (workers) 10W (S1414).

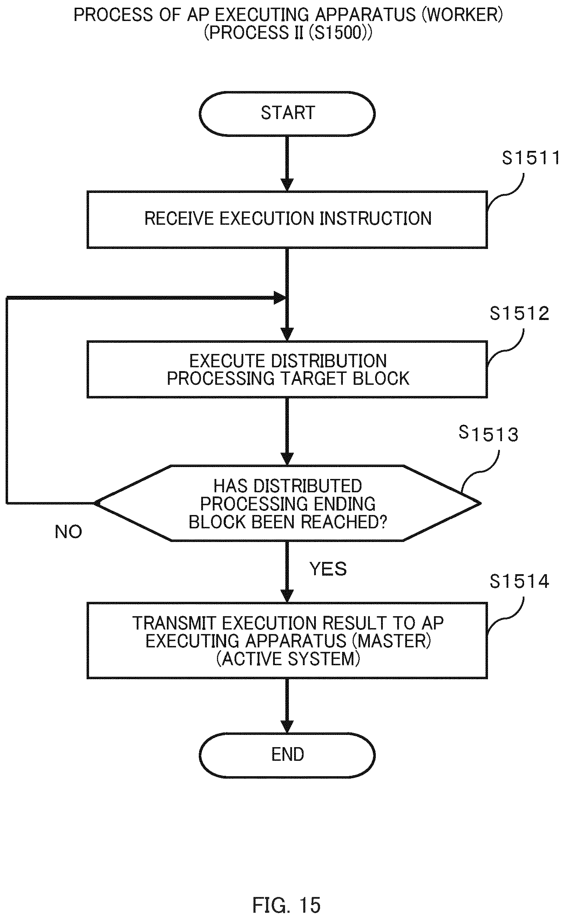

Fig. 15 is a flowchart for explaining the detail of a process (hereinafter referred to as a process II (S1500)) in S1113 of Fig. 11 conducted by the AP executing apparatus (worker) 10W. Hereinafter, the process II (S1500) will be described with Fig. 15.

First, the processing coordinating part 812 of the AP software 800 of the AP executing apparatus (worker) 10W receives the sensor data and the execution instruction from the AP executing apparatus (master)(active system) 10ML (S1511).

Subsequently, the flow execution controlling part 811 of the AP executing apparatus (worker) 10W executes the distributed processing target block 913 on the sensor data received together with the execution instruction (S1512).

The flow execution controlling part 811 of the AP executing apparatus (worker) 10W determines whether or not the distributed processing target block 913 has been completed and the processing has reached the distributed processing ending block 914 (S1513). Once the processing has reached the distributed processing ending block 914 (S1513: YES), the processing coordinating part 812 of the AP software 800 of the AP executing apparatus (worker) 10W transmits an execution result to the AP executing apparatus (master)(active system) 10ML (S1514).

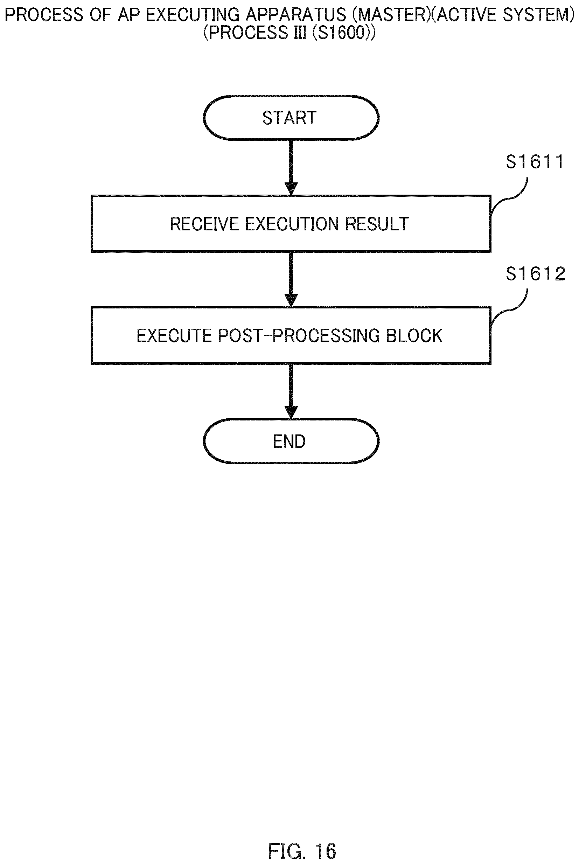

Fig. 16 is a flowchart for explaining the detail of a process (hereinafter referred to as process III (S1600)) in S1114 of Fig. 11 conducted by the AP executing apparatus (master)(active system) 10ML. Hereinafter, the process III will be described with Fig. 16.

The processing coordinating part 812 of the AP executing apparatus (master)(active system) 10ML receives the execution result from the processing coordinating part 812 of the AP executing apparatus (worker) 10W (S1611).

Subsequently, the flow execution controlling part 811 of the AP executing apparatus (master)(active system) 10ML executes the post-processing block 915 (S1612).

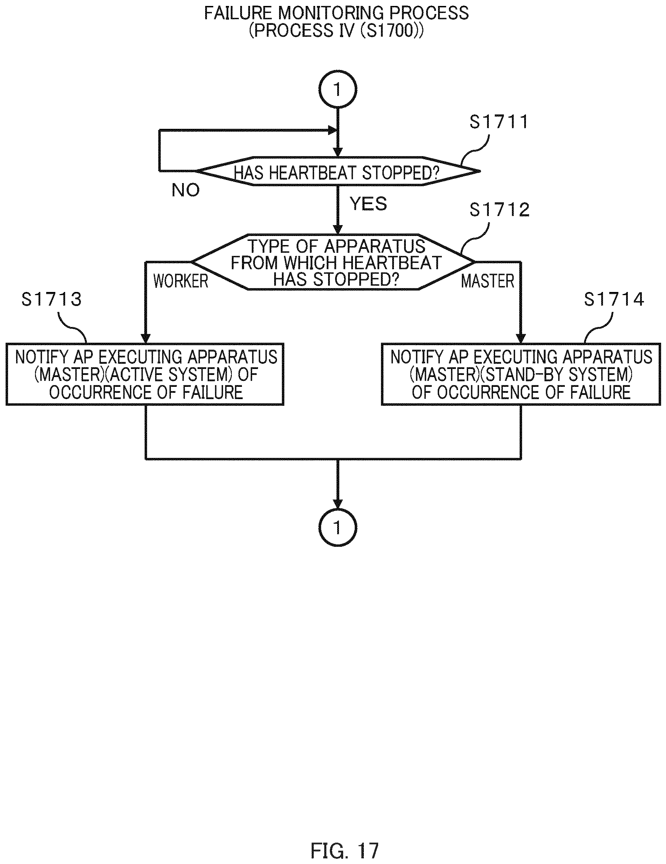

Fig. 17 is a flowchart for explaining a process of monitoring occurrence of a failure in the AP executing apparatus (master)(active system) 10ML or the AP executing apparatus (worker) 10W (hereinafter referred to as process IV (S1700)) conducted by the cluster management apparatus 4 in Figs. 12 and 13. Hereinafter, the process IV (S1700) will be described with Fig. 17.

As described above, the AP executing apparatus (master)(active system) 10ML, the AP executing apparatus (master)(stand-by system) 10MS, and the 2 AP executing apparatuses (workers) 10W in the normal operating state transmit heartbeats to the cluster management apparatus 4. Upon detection of the stop of heartbeats in any of the AP executing apparatuses 10 (S1711: YES), the cluster management apparatus 4 determines the type of the apparatus which has stopped heartbeats (S1712).

In the case where the type of the apparatus is the AP executing apparatus (worker) 10W (S1712: worker), the cluster management apparatus 4 notifies the AP executing apparatus (master)(active system) 10ML of the occurrence of the failure in the AP executing apparatus (worker) 10W (S1713).

On the other hand, in the case where the type of the apparatus is the AP executing apparatus (master)(active system) 10ML (S1712: master), the cluster management apparatus 4 notifies the AP executing apparatus (master)(stand-by system) 10MS of the occurrence of the failure in the AP executing apparatus (master)(active system) 10ML (S1714).

Note that the cluster management apparatus 4 repeatedly executes the above-described processing (S1711 to S1714).

According to the above-described failure monitoring process (process IV), it is possible to deal with the occurrence of a failure in both of the AP executing apparatuses (workers) 10W and the AP executing apparatus (master)(active system) 10ML and to guarantee the reliability of the system.

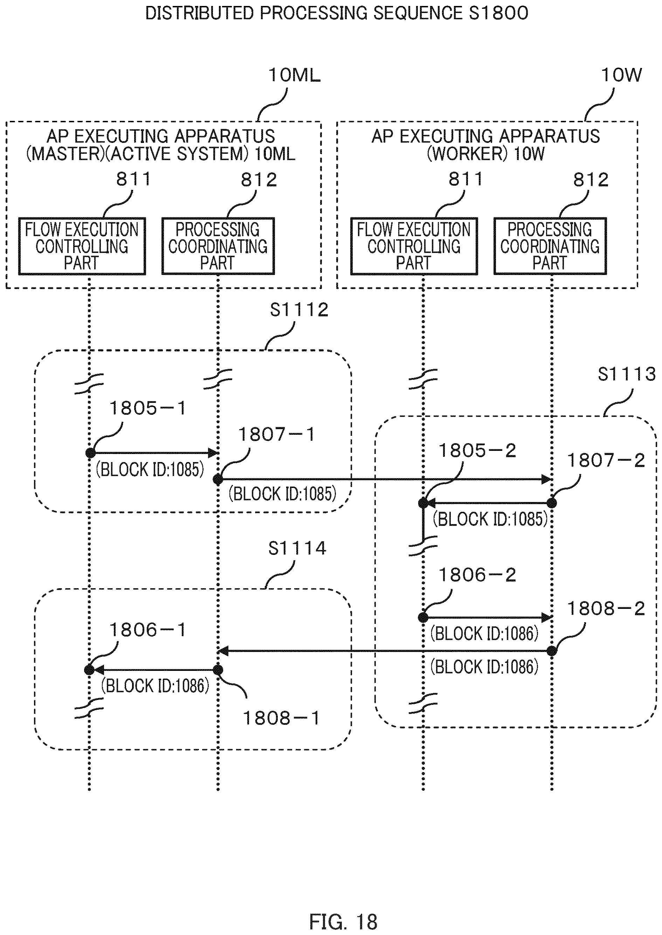

Fig. 18 is a sequence diagram for explaining the detail of a process (hereinafter referred to as a distributed processing sequence S1800) conducted between the AP executing apparatus (master)(active system) 10ML and the AP executing apparatus (worker) 10W in the processes (process I to process III) in S1112 to S1114 of Fig. 11 with a focus on the operation of the AP software 800 (the flow execution controlling part 811 and the processing coordinating part 812) the logic content of which is common between the apparatuses. Hereinafter, the distributed processing sequence S1800 will be described with Fig. 18. Note that the AP software 800 of the AP executing apparatus (master)(stand-by system) 10MS, which operates as the active system at the occurrence of a failure in the AP executing apparatus (master)(active system) 10ML, also conducts the same processing.

As shown in Fig. 18, first, the flow execution controlling part 811 of the AP executing apparatus (master)(active system) 10ML transmits an execution instruction (message) to the processing coordinating part 812 of the apparatus itself in a block (1805-1), which is one of the distributed processing starting blocks 912 in S1112. In this event, the flow execution controlling part 811 sets (adds) information (hereinafter referred to as distributed processing state information) indicating whether the execution instruction has been caused by the distributed processing starting block 912 or the distributed processing ending block 914 in (to) the execution instruction to be transmitted. In the present example, the flow execution controlling part 811 is assumed to set "1805", which is the block ID of the distributed processing starting block 912, as the distributed processing state information.

Subsequently, in the block (1807-1), which is one of the blocks S1112, the processing coordinating part 812 of the AP executing apparatus (master)(active system) 10ML transmits the execution instruction received from the flow execution controlling part 811 together with the sensor data to the processing coordinating part 812 of the AP executing apparatus (worker) 10W.

Upon receipt of the execution instruction, the processing coordinating part 812 of the AP executing apparatus (worker) 10W transmits the execution instruction together with the sensor data to the flow execution controlling part 811 of the AP executing apparatus (worker) 10W (1807-2).

As a result, the process of the distributed processing target block 913 is started in the AP executing apparatus (worker) 10W (1805-2).

Upon completion of the process of the distributed processing target block 913, the flow execution controlling part 811 of the AP executing apparatus (worker) 10W transmits an execution result (message) to the processing coordinating part 812 of the AP executing apparatus (worker) 10W (S1806-2). In addition, in this event, the flow execution controlling part 811 sets (adds) information indicating that the execution result has been caused by the distributed processing ending block 914 as the distributed processing state information in (to) the execution result to be transmitted. In the present example, the flow execution controlling part 811 is assumed to set "1806", which is the block ID of the distributed processing ending block 914, as the distributed processing state information.

Upon receipt of the execution result, the processing coordinating part 812 of the AP executing apparatus (worker) 10W transmits the execution result to the processing coordinating part 812 of the AP executing apparatus (master)(active system) 10ML (S1808-2).

Upon receipt of the execution result, the processing coordinating part 812 of the AP executing apparatus (master)(active system) 10ML transmits the execution result to the flow execution controlling part 811 of the AP executing apparatus (master)(active system) 10ML (S1808-1).

Upon receipt of the execution result (S1806-1), the flow execution controlling part 811 of the AP executing apparatus (master)(active system) 10ML subsequently starts executing the post-processing block 915 (S1806-1).

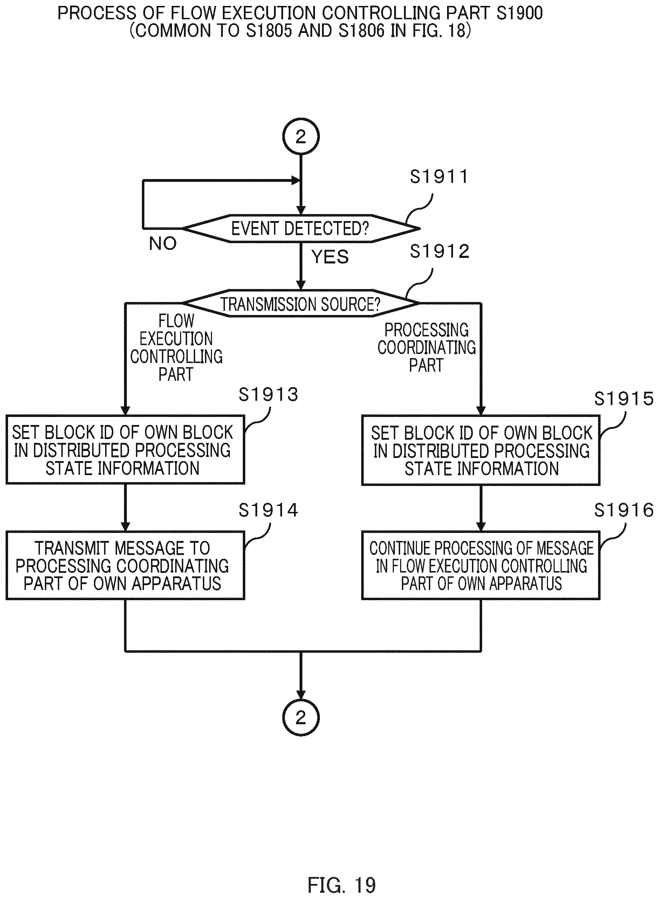

Fig. 19 is a flowchart for explaining the detail of a process S1900 (processes in the respective blocks of 1805-1, 1805-2, 1806-2, 1806-1 in Fig. 18) of the flow execution controlling part 811 of the AP executing apparatus (master)(active system) 10ML or the flow execution controlling part 811 of the AP executing apparatus (worker) 10W.

First, with the occurrence of an event as a timing (S1911: YES), the flow execution controlling part 811 determines the transmission source of the message (S1912). Note that the occurrence of an event mentioned herein means that the timing of starting the process of its own block (any of 1805-1, 1805-2, 1806-2, 1806-1 in Fig. 18) has come. In addition, the transmission source mentioned herein refers to the executing entity (the flow execution controlling part 811 or the processing coordinating part 812) of the block which has invoked the timing.

In the case where the transmission source is the flow execution controlling part 811 (S1912: the flow execution controlling part), the processing proceeds to S1913. In the case where the transmission source is the processing coordinating part 812 (S1912: the processing coordinating part), the processing proceeds to S1915.

In S1913, the flow execution controlling part 811 generates a message (an execution instruction or an execution result) in which the block ID of its own block is set as the distributed processing state information and transmits the generated message to the processing coordinating part 812 of the own apparatus (S1914). Thereafter, the processing returns to S1911.

On the other hand, in S1915, the flow execution controlling part 811 generates a message (an execution instruction or an execution result) in which the block ID of its own block is set as the distributed processing state information and continues the processing of the generated message (S1916). Thereafter, the processing returns to S1911.

The processing in Fig. 19 with Fig. 18 will be described in detail.

For example, in the case where the timing of starting the block of 1805-1, which is the distributed processing starting block 912, has come (S1911: YES), the flow execution controlling part 811 of the AP executing apparatus (master)(active system) 10ML determines that the transmission source of the message is the flow execution controlling part 811 (S1912: the flow execution controlling part), generates an execution instruction in which "1805", which is the block ID of the block (the distributed processing starting block 912) is set as the distributed processing state information (S1913), and transmits the generated execution instruction to the processing coordinating part 812 of the AP executing apparatus (master)(active system) 10ML, which is the own apparatus (S1914).

In addition, for example, in the case where the timing of starting the block of 1805-2, which is the distributed processing starting block 912, has come (S1911: YES), the flow execution controlling part 811 of the AP executing apparatus (worker) 10W determines that the transmission source of the message is the processing coordinating part 812 (S1912: the processing coordinating part) and generates an execution instruction in which "1805", which is the block ID of the block (the distributed processing starting block 912) is set as the distributed processing state information (S1915), and the flow execution controlling part 811 starts the process of the distributed processing target block 913 (S1916).

In addition, for example, in the case where the timing of starting the block of 1806-2, which is the distributed processing ending block 914, has come (S1911: YES), the flow execution controlling part 811 of the AP executing apparatus (worker) 10W determines that the transmission source of the message is the flow execution controlling part 811 (S1912: the flow execution controlling part), generates an execution instruction in which "1806", which is the block ID of the block (the distributed processing ending block 914), is set as the distributed processing state information (S1913), and transmits the generated execution result to the processing coordinating part 812 of the AP executing apparatus (worker) 10W, which is the own apparatus (S1914).

In addition, for example, in the case where the timing of starting the block of 1806-1, which is the distributed processing ending block 914, has come (S1911: YES), the flow execution controlling part 811 of the AP executing apparatus (master)(active system) 10ML determines that the transmission source of the message is the processing coordinating part 812 (S1912: the processing coordinating part) and generates an execution instruction in which "1806", which is the block ID of the block (the distributed processing ending block 914), is set as the distributed processing state information (S1915), and the flow execution controlling part 811 starts the process of the post-processing block 915 (S1916).

As described above, the processing of the flow execution controlling part 811 may be configured as a common logic between the AP executing apparatus (master)(active system) 10ML and the AP executing apparatus (worker) 10W. Hence, the productivity and the maintainability of the AP software 800 can be improved.

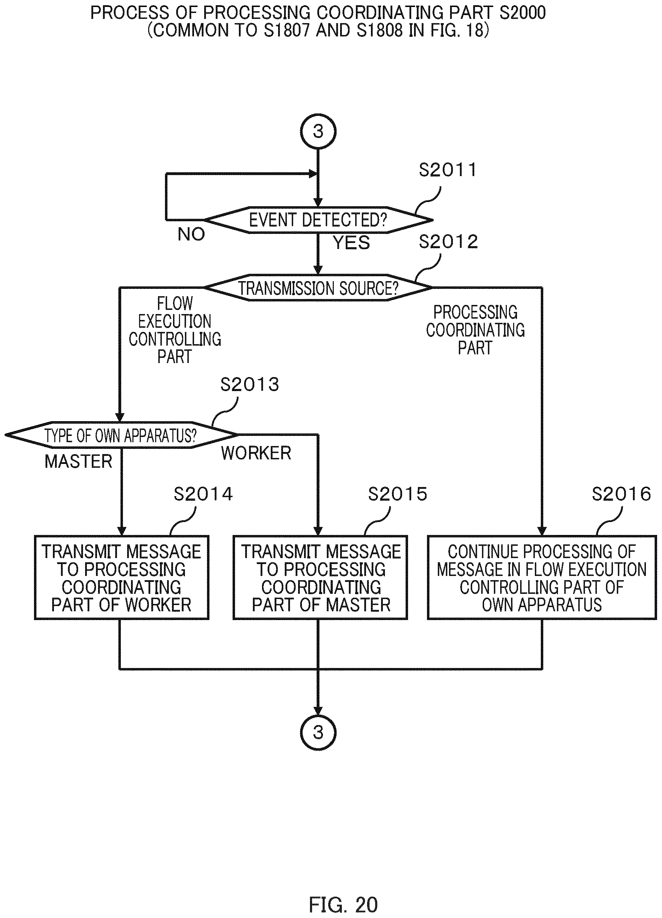

Fig. 20 is a flowchart for explaining the detail of a process S2000 (processes in the blocks of 1807-1, 1807-2, 1808-2, 1808-1 in Fig. 18) of the processing coordinating part 812 of the AP executing apparatus (master)(active system) 10ML or the processing coordinating part 812 of the AP executing apparatus (worker) 10W.

In S2011, with the occurrence of an event as a timing (S2011: YES), the processing coordinating part 812 determines the transmission source of the message (S2012). Note that the occurrence of an event mentioned herein means that the timing of starting the process of its own block (any of 1807-1, 1807-2, 1808-2, 1808-1 in Fig. 18) has come. In addition, the transmission source mentioned herein refers to the executing entity (the flow execution controlling part 811 or the processing coordinating part 812) of the block which has invoked the timing.

In the case where the transmission source is the flow execution controlling part 811 (S2012: flow execution controlling part), the processing proceeds to S2013. In the case where the transmission source is the processing coordinating part 812 (S2012: the processing coordinating part), the processing proceeds to S2016.

In S2013, the processing coordinating part 812 determines the type of the own apparatus (whether the own apparatus is master or worker). In the case where the own apparatus is master (S2013: master), the processing proceeds to S2014. In the case where the own apparatus is worker (S2013: worker), the processing proceeds to S2015.

In S2014, the processing coordinating part 812 transmits a message to the processing coordinating part 812 of the AP executing apparatus (worker) 10W.

In S2015, the processing coordinating part 812 transmits a message to the processing coordinating part 812 of the AP executing apparatus (master)(active system) 10ML.

On the other hand, in S2016, the flow execution controlling part 811 of the own apparatus continues the processing of the message.

The processing in Fig. 20 with Fig. 18 will be described in detail.

For example, in the case where the timing of starting the block of 1807-1, which is the distributed processing starting block 912, has come (S2011: YES), the processing coordinating part 812 of the AP executing apparatus (master)(active system) 10ML determines that the transmission source of the message is the flow execution controlling part 811 (S2012: the flow execution controlling part), subsequently determines that the type of the own apparatus is master (S2013: master), and transmits the execution instruction together with the sensor data to the processing coordinating part 812 of the AP executing apparatus (worker) 10W (S2014).

In addition, for example, in the case where the timing of starting the block of 1807-2, which is the distributed processing starting block 912, has come (S2011: YES), the processing coordinating part 812 of the AP executing apparatus (worker) 10W determines that the transmission source of the message is the processing coordinating part 812 (S2012: the processing coordinating part), subsequently determines that the type of the own apparatus is master (S2013: master), transmits the execution instruction to the flow execution controlling part 811 of the AP executing apparatus (worker) 10W, which is the own apparatus, and continues the process of the block (S2016).

In addition, for example, in the case where the timing of starting the block of 1808-2, which is the distributed processing ending block 914, has come (S2011: YES), the processing coordinating part 812 of the AP executing apparatus (worker) 10W determines that the transmission source of the message is the flow execution controlling part 811 (S2012: the flow execution controlling part), subsequently determines that the type of the own apparatus is worker (S2013: worker), and transmits the execution result to the processing coordinating part 812 of the AP executing apparatus (master)(active system) 10ML (S2015).

In addition, for example, in the case where the timing of starting the block of 1808-1, which is the distributed processing ending block 914, has come (S2011: YES), the processing coordinating part 812 of the AP executing apparatus (master)(active system) 10ML determines that the transmission source of the message is the processing coordinating part 812 (S2012: the processing coordinating part) and subsequently transmits the execution result to the flow execution controlling part 811 of the AP executing apparatus (master)(active system) 10ML, which is the own apparatus, and the flow execution controlling part 811 of the own apparatus starts the process of the post-processing block 915 (S2016).

As described above, the processing of the processing coordinating part 812 may be configured as a common logic (algorithm) between the AP executing apparatus (master) (active system) 10ML and the AP executing apparatus (worker) 10W. Hence, the productivity and the maintainability of the AP software 800 can be improved.

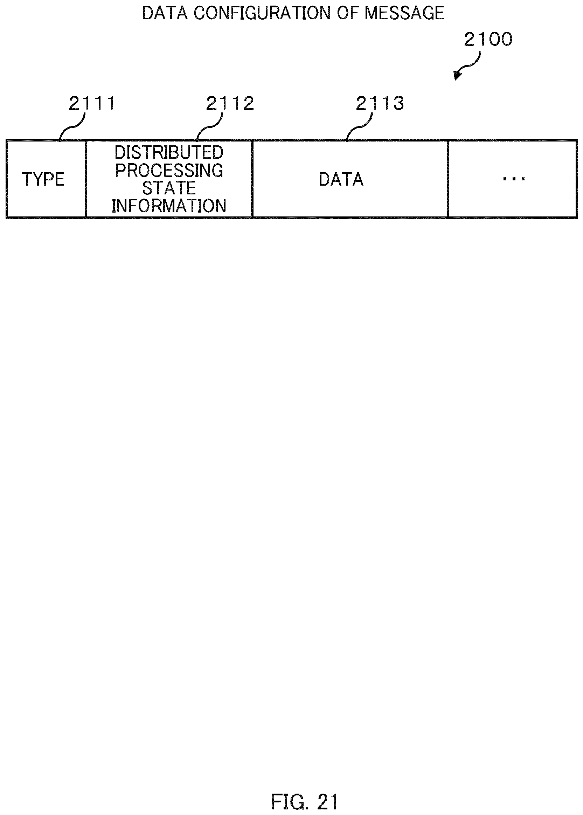

Fig. 21 shows an example of the data configuration of the aforementioned message (execution instruction, execution result) . As shown in Fig. 21, the message 2100 has items of type 2111, distributed processing state information 2112, and data 2113.

In type 2111, information indicating the type (execution instruction or execution result) of the message 2100 is set. In distributed processing state information 2112, the aforementioned distributed processing state information is set. In data 2113, for example, sensor data to be transmitted together with the execution instruction is set in the case where the type of the message 2100 is an execution instruction, or the result of processing of the AP software 800 (for example, the result of processing conducted by the distributed processing target block 913 on the sensor data) is set in the case where the type of the message 2100 is an execution result.

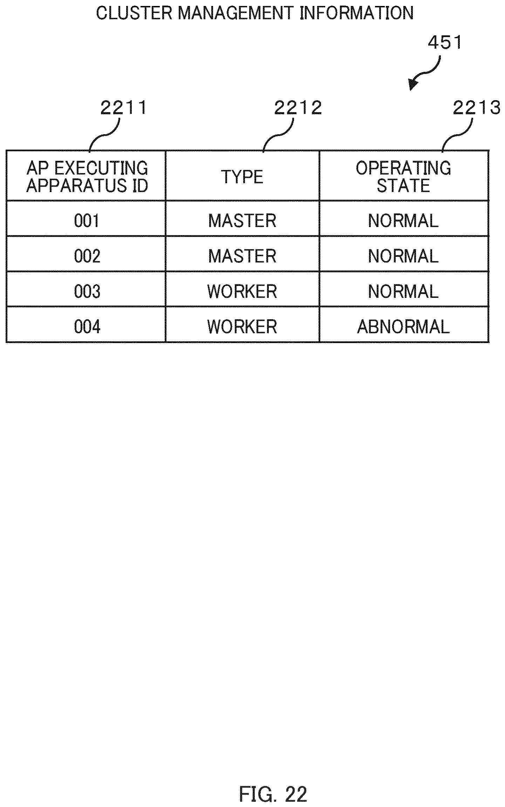

Fig. 22 shows an example of the cluster management information 451 managed by the cluster management apparatus 4. The cluster management apparatus 4 acquires the content of the cluster management information 451 by communicating with the AP executing apparatus 10 as necessary (for example, in real time), and reflects the acquired content in the cluster management information 451.

As shown in Fig. 22, the cluster management information 451 contains a plurality of records (the number of the AP executing apparatuses 10 forming the cluster) each having items of AP executing apparatus ID 2211, type 2212, and operating state 2213.

In the AP executing apparatus ID 2211, the identifier (hereinafter referred to as AP executing apparatus ID) of the AP executing apparatus 10 is set. In the type 2212, information indicating the type of the AP executing apparatus 10 (master or worker) is set. In the operating state 2213, information indicating the operating state of the AP executing apparatus 10 (normal or abnormal) is set.

As described in detail so far, according to the information processing system 1 of the present embodiment, it is possible to create software that supports distributed processing by editing a data flow using the flow editor. Particularly, the user is allowed to easily create software that supports distributed processing only by inserting the distributed processing starting block 912 and the distributed processing ending block into the data flow and thus to reduce the production cost and shorten the development period.

As described above, according to the information processing system 1 of the present embodiment, it is possible to secure the scalability and reliability while enjoying high productivity of the flow editor and further to apply the logic constructed by the flow editor to a mission critical system that requires a large-scale system and a high reliability without modification.

Although one embodiment of the present invention has been described so far, it goes without saying that the present invention is not limited to the above-described embodiment and can be modified in various manners without departing from the gist of the present invention. For example, the above-described embodiment has been described so as to explain the present invention in an easy-to-understand manner, and the present invention is not necessarily limited to one including all the same configurations as those of the above-described embodiment. Moreover, addition of another configuration, deletion, and replacement can be made for part of the above-described configurations.

In addition, some or all of the above-described configurations, functional parts, processing parts, processing means, and the like may be achieved with hardware by design using integrated circuits, for example. Moreover, each of the above-described configurations, functions, and the like may be achieved with software by a processor interpreting and executing programs that achieve these functions. Information such as programs, tables, files for achieving these functions can be placed in recording devices such as memories, hard disks, and SSDs (Solid State Drives) and recording media such as IC cards, SD cards, and DVDs.

In addition, in each of the above-described drawings, control lines and information lines show what are considered to be necessary for explanation, and all control lines and information lines on implementation are not necessarily shown. For example, it may be considered that almost all the configurations are actually coupled to each other.

In addition, the arrangements of the various functional parts, the various processing parts, and the various databases of the flow editing apparatus 2, the sensor apparatus 3, the cluster management apparatus 4, the AP executing apparatus 10, and the management apparatus 5 described above are merely examples. The arrangements of the various functional parts, the various processing parts, and the various databases may be changed to optimum arrangements from the viewpoint of the performances of hardware and software included in these apparatuses, the processing efficiency, the communication efficiency, and the like.

For example, the cluster management apparatus 4 and the management apparatus 5 may be achieved in a single information processing apparatus 100. Moreover, although in the above-described embodiment, a duplex system in which an active system and a stand-by system are employed as the AP executing apparatuses 10 that operate as master, a dual system may be employed to secure the redundancy.

In addition, the configurations (schemas) and the like of the databases that store the above-described various data may be changed flexibly from the viewpoint of efficient utilization of resources, an improvement in processing efficiency, an improvement in access efficiency, an improvement in search efficiency, and the like.

### [Reference Signs List]

- 1: information processing system
- 2: flow editing apparatus
- 205: storage part
- 210: flow editing part
- 211: flow editing environment providing part
- 212: flow file transferring part
- 251: flow file
- 3: sensor apparatus
- 4: cluster management apparatus
- 405: storage part
- 410: cluster managing part
- 411: cluster configuration managing part
- 412: cluster operating status monitoring part
- 451: cluster management information
- 5: management apparatus
- 505: storage part
- 510: container managing part
- 511: flow file receiving part
- 512: container generating part
- 513: container deploying part
- 520: container execution status monitoring part
- 551: flow file
- 552: container
- 553: container execution status
- 554: AP executing apparatus configuration information
- 8: communication network
- 10 AP: executing apparatus
- 10ML: AP executing apparatus (master)(active system)
- 10MS: AP executing apparatus (master)(stand-by system)
- 10W: AP executing apparatus (worker)
- 100: information processing apparatus
- 105: storage part
- 110: container receiving part
- 120: container execution controlling part
- 120, 151: container
- 800: AP software
- 811: flow execution controlling part
- 812: processing coordinating part
- 900: data flow

## Claims

1. An information processing system which executes software based on a data flow edited by a flow editor, comprising:
a plurality of information processing apparatuses which form a cluster for conducting distributed processing of the software, wherein
the data flow contains:
a distributed processing starting block which is a block to start the distributed processing;
a distributed processing ending block which is a block to end the distributed processing; and
a distributed processing target block which is a block which is described between the distributed processing starting block and the distributed processing ending block,
a master apparatus which is one of the information processing apparatuses forming the cluster transmits a message containing an execution instruction of the distributed processing target block to a plurality of worker apparatuses which form the cluster when the distributed processing starting block has been reached at the time of executing the data flow,
upon receipt of the message, each of the worker apparatuses executes the distributed processing target block and transmits a message containing an execution result of the distributed processing target block to the master apparatus, and
upon receipt of the execution results from the plurality of worker apparatuses, the master apparatus executes a block of the data flow which follows the distributed processing ending block.

2. The information processing system according to claim 1, wherein
the software includes a program which achieves functions of:
a flow execution controlling part which conducts execution control of the data flow; and
a processing coordinating part which transmits and receives the message containing the execution instruction or the execution result to coordinate processing between the information processing apparatuses during the distributed processing, and
the distributed processing is achieved by the information processing apparatuses executing the program described in a common logic.

3. The information processing system according to claim 2, wherein
the flow execution controlling part,
when a timing of starting a block of the data flow has come, determines whether a transmission source which is an executing entity of the block which has invoked the timing is the flow execution controlling part or the processing coordinating part,
transmits the message in which distributed processing state information which is information indicating whether the block has been caused by the distributed processing starting block or by the distributed processing ending block is set to the processing coordinating part of the own apparatus in a case where the transmission source is the flow execution controlling part, and
sets the distributed processing state information which is information indicating whether the block has been caused by the distributed processing starting block or by the distributed processing ending block in the message and continues the processing of the message in a case where the transmission source is the processing coordinating part.

4. The information processing system according to claim 2 or 3, wherein
the processing coordinating part,
when a timing of starting a block of the data flow has come, determines whether a transmission source which is an executing entity of the block which has invoked the timing is the flow execution controlling part or the processing coordinating part,
determines whether the own apparatus is the master apparatus or the worker apparatus in a case where the transmission source is the flow execution controlling part, transmits the message to the processing coordinating parts of the worker apparatuses in a case where the own apparatus is the master apparatus, and transmits the message to the processing coordinating part of the master apparatus in a case where the own apparatus is the worker apparatus, and
continues the processing of the message in a case where the transmission source is the processing coordinating part.

5. The information processing system according to claim 2, wherein
the software is stored in the information processing apparatuses forming the cluster as a container containing a program for achieving the respective functions of the flow execution controlling part and the processing coordinating part.

6. The information processing system according to claim 1, comprising:
a cluster management apparatus which is an information processing apparatus communicatively coupled to the plurality of information processing apparatuses forming the cluster, wherein
the cluster management apparatus monitors whether or not a failure has occurred in the worker apparatuses based on heartbeats sent from the worker apparatuses, and upon detection of the occurrence of a failure in one of the worker apparatuses, notifies the master apparatus of the occurrence of the failure, and
the master apparatus retransmits the execution instruction to the other worker apparatus in which no failure has occurred.

7. The information processing system according to claim 1, comprising:
a cluster management apparatus which is an information processing apparatus communicatively coupled to the plurality of information processing apparatuses forming the cluster, wherein
the cluster includes the master apparatus of an active system and the master apparatus of a stand-by system,
the cluster management apparatus monitors whether or not a failure has occurred in the master apparatus of the active system based on heartbeats sent from the master apparatus of the active system, and upon detection of the occurrence of a failure in the master apparatus of the active system, notifies the master apparatus of the stand-by system of the occurrence of the failure,
upon receipt of the notification, the master apparatus of the stand-by system starts operating as the master apparatus of an active system.

8. An information processing apparatus which provides an editing environment for the data flow in the information processing system according to claim 1, wherein
the information processing apparatus provides an editing environment for a data flow containing the distributed processing starting block, the distributed processing ending block, and the distributed processing target block.

9. A method of controlling an information processing system which executes software based on a data flow edited by a flow editor and includes a plurality of information processing apparatuses forming a cluster for conducting distributed processing of the software,
the data flow containing:
a distributed processing starting block which is a block to start the distributed processing;
a distributed processing ending block which is a block to end the distributed processing; and
a distributed processing target block which is a block described between the distributed processing starting block and the distributed processing ending block,
the method comprising the steps of:
causing a master apparatus which is one of the information processing apparatuses forming the cluster to transmit a message containing an execution instruction of the distributed processing target block to a plurality of worker apparatuses which form the cluster when the distributed processing starting block has been reached at the time of executing the data flow;
upon receipt of the message, causing each of the worker apparatuses to execute the distributed processing target block and transmit a message containing an execution result of the distributed processing target block to the master apparatus; and
upon receipt of the execution results from the plurality of worker apparatuses, causing the master apparatus to execute a block of the data flow which follows the distributed processing ending block.

10. The method of controlling an information processing system according to claim 9, wherein
the software contains a program which achieves functions of:
a flow execution controlling part which conducts execution control of the data flow; and
a processing coordinating part which transmits and receives the message containing the execution instruction or the execution result to coordinate processing between the information processing apparatuses during the distributed processing, and
the distributed processing is achieved by the information processing apparatuses executing the program described in a common logic.

11. The method of controlling an information processing system according to claim 10, wherein
the flow execution controlling part further executes the steps of:
once a timing of starting a block of the data flow has come, determining whether a transmission source which is an executing entity of the block which has invoked the timing is the flow execution controlling part or the processing coordinating part;
transmitting the message in which distributed processing state information which is information indicating whether the block has been caused by the distributed processing starting block or by the distributed processing ending block is set to the processing coordinating part of the own apparatus in a case where the transmission source is the flow execution controlling part; and
setting the distributed processing state information which is information indicating whether the block has been caused by the distributed processing starting block or by the distributed processing ending block in the message and continuing the processing of the message in a case where the transmission source is the processing coordinating part.

12. The method of controlling an information processing system according to claim 10 or 11, wherein
the processing coordinating part executes the steps of:
once a timing of starting a block of the data flow has come, determining whether a transmission source which is an executing entity of the block which has invoked the timing is the flow execution controlling part or the processing coordinating part;
determining whether the own apparatus is the master apparatus or the worker apparatus in a case where the transmission source is the flow execution controlling part, transmitting the message to the processing coordinating parts of the worker apparatuses in a case where the own apparatus is the master apparatus, and transmitting the message to the processing coordinating part of the master apparatus in a case where the own apparatus is the worker apparatus; and
continuing the processing of the message in a case where the transmission source is the processing coordinating part.

13. The method of controlling an information processing system according to claim 10, wherein
the software is stored in the information processing apparatuses forming the cluster as a container containing a program for achieving the respective functions of the flow execution controlling part and the processing coordinating part.

14. The method of controlling an information processing system according to claim 9, wherein a cluster management apparatus which is an information processing apparatus communicatively coupled to the plurality of information processing apparatuses forming the cluster is included in the information processing system, wherein
the cluster management apparatus executes the step of monitoring whether or not a failure has occurred in the worker apparatuses based on heartbeats sent from the worker apparatuses, and upon detection of the occurrence of a failure in one of the worker apparatuses, notifying the master apparatus of the occurrence of the failure, and
the master apparatus executes the step of retransmitting the execution instruction to the other worker apparatus in which no failure has occurred.

15. The method of controlling an information processing system according to claim 9, wherein
a cluster management apparatus which is an information processing apparatus communicatively coupled to the plurality of information processing apparatuses forming the cluster is included in the information processing system,
the cluster includes the master apparatus of an active system and the master apparatus of a stand-by system,
the cluster management apparatus executes the step of:
monitoring whether or not a failure has occurred in the master apparatus of the active system based on heartbeats sent from the master apparatus of the active system, and upon detection of the occurrence of a failure in the master apparatus of the active system, notifying the master apparatus of the stand-by system of the occurrence of the failure, and
the master apparatus of the stand-by system executes the step of, upon receipt of the notification, starting operating as the master apparatus of an active system.
